# EUROPÄISCHE PATENTANMELDUNG

(11) **EP 2 003 404 A1**
(43) Veröffentlichungstag der Anmeldung: **17.12.2008**
(21) Anmeldenummer: 07011511.8
(22) Anmeldetag: 12.06.2007
(51) Int. Cl.: F24J 2/34, F24J 2/44

(54) **Wasserspeichervorrichtung zur Erwärmung durch Sonnenenergie**

(71) Anmelder: Paradigma Energie- und Umwelttechnik GmbH und Co. KG., 76307 Karlsbad (DE)
(72) Erfinder: Meissner, Rolf, Dr. rer. nat., 76307 Karslbad (DE)

(57) **Zusammenfassung**

Wasserspeichervorrichtung zur Erwärmung durch Sonnenenergie mit einem äußeren Speichertank (1), der mit Wasser oder einem Wasser-Frostschutzmittel-Gemisch gefüllt und mit einer Wärmedämmung (2) umgeben ist und in den von unten Dewar-Solar-Vakuumröhren (3) hineinragen und dadurch ebenfalls gefüllt sind, in welchem sich ein weiterer, innerer Speichertank (4) befindet, der als Drucktank ausgelegt und mit Trinkwasser oder Brauchwasser gefüllt ist. Der äußere Speichertank (1) ist mit einem als Sicherheitsventil wirkenden Rückflussverhinderer (5) ausgestattet, der erst bei einem geringen Überdruck gegenüber dem atmosphärischen Druck der Umgebung öffnet. Zur Aufnahme der sich beim Erwärmen ausdehnenden Flüssigkeit im äußeren Speichertank (1) wird kein Ausdehnungsgefäß verwendet, sondern der äußere Speichertank ist selbst zugleich das Ausdehnungsgefäß und wird dazu in teilgefülltem Zustand verwendet. Die infolge von Erwärmung und Ausdehnung verdrängte Flüssigkeit aus dem inneren Speichertank (4) kann bei einer Ausführung über ein druckbegrenzendes Sicherheitsventil (6) in den äußeren Speichertank (1) überströmen (7). In einer weiteren Ausführung ist oberhalb des äußeren Speichertanks (1) ein Kondensator (8) angebracht ist, der mit dem äußeren Speichertank so verbunden ist, dass entstehender Dampf in den Kondensator (8) gelangt und dass das gesamte Kondensat wieder in den äußeren Speichertank (1) zurückfließt. Beide Speichertanks können mit nach innen öffnenden Rückflussverhinderern (9) ausgestattet sein, die erst bei einem geringen Unterdruck gegenüber dem atmosphärischen Druck der Umgebung öffnen. Ein kleiner Teil des inneren Speichertanks (4) ist nicht vom äußeren Speichertank (1) eingeschlossen.

## Beschreibung

Thermosiphonspeicher mit Sonnenkollektoren zählen zu den einfachsten und am weitesten verbreiteten Solarsystemen. Ihr größter Vorteil besteht in ihrer relativen Einfachheit und in der von elektrischer Zusatzenergie unabhängigen Betriebsweise. Es gibt sie in vielen Ausführungen. Ihre Gemeinsamkeit besteht darin, dass ein Sonnenkollektor an einen Speichertank, der höher als er selbst angeordnet ist, seine Wärme über eine Schwerkraftzirkulation abgibt. Die Sonnenkollektoren sind entweder separat über Rohre an den Speichertank anzuschließen (z. B. US 4599994) oder in diesen integriert (z. B. WO 89/ 02569 A1). Eine spezielle Ausführung verwendet Dewar-Solar-Vakuumröhren zur solaren Wärmegewinnung. Das sind doppelwandige Glasrohre. Das Innenrohr ist einseitig offen und ansonsten vollständig vom Außenrohr eingekapselt. Wie bei einem Dewar-Thermosgefäß herrscht zwischen den Glasröhren Vakuum. Die Außenseite der Innenröhre trägt eine Absorberschicht. Die Dewar-Solar-Vakuumröhren werden mit ihrem offenen Ende schräg von unten in den liegenden Speichertank gesteckt und gegen diesen abgedichtet. Sie füllen sich mit Speicherflüssigkeit, sobald der Speichertank gefüllt wird. Wenn sie die Sonnenwärme absorbiert haben, erwärmt diese das Wasser in den Röhren, das dann in den kälteren Speichertank hineinzirkuliert. Auf diese Weise bilden der Röhren-Sonnenkollektor und der Speichertank eine untrennbare Einheit. Um die wirksame Aperturfläche des Röhren-Sonnenkollektors zu vergrößern, können die Vakuumröhren mit Spiegeln ausgestattet werden, so dass auch die zwischen den Röhren einfallende Sonnenstrahlung auf den Absorber gelenkt wird (DE 102 00 042 A1).

Der Vorteil dieser Dewar-Vakuumröhren-Thermosiphonspeicher besteht unter anderem in ihrer einfachen Bauweise, einem sehr hohen Wirkungsgrad der Solarenergienutzung und geringen Wärmeverlusten. Ihr größter Nachteil besteht darin, dass sie keinen großen Druck aushalten und deshalb nicht ohne weiteres an ein Trinkwasser-Leitungsnetz angeschlossen werden können, bzw., dass sie aufgrund ihrer Zerbrechlichkeit eine potentielle Gefahr darstellen könnten, wenn sie unter Leitungsnetzdruck stünden. Um diesen Nachteil zu beheben, verwendet man anstelle von offenen Dewar-Solar-Vakuumröhren z. B. Heat-pipe-Röhren. Bei diesen ist das Ende nicht offen, sondern mit einem kleinen metallischen Wärmetauscher versehen, durch den die Sonnenwärme in den Speichertank gelangt (z. B. JP60103251, JP59153072). Es gibt mit 10 2006 001 566 einen drucklos ausgeführten Thermosiphonspeicher, der mit Wasser oder einem Wasser-Frostschutzmittel-Gemisch gefüllt ist und in den von unten doppelwandige Dewar-Solar-Vakuumröhren mit ihrem offenen Ende hineinragen und dadurch ebenfalls gefüllt sind, in welchem sich ein weiterer, innerer Speichertank befindet, der als Drucktank ausgelegt und mit Trinkwasser oder Brauchwasser gefüllt ist.

Weiterhin nennt 10 2006 001 566 vorteilhafte Ausführungen und Merkmale, wie die zylindrische Form beider Speichertanks, deren mögliche exzentrische Anordnung, das Freilassen einer Seite des Innentanks für Anschlüsse und notwendige Aggregate, ein Ausdehnungsgefäß für den äußeren sowie ein Sicherheitsventil für den inneren Speichertank, die Vergrößerung der Aperturfläche durch Spiegel, ein horizontales perforiertes Rohr zur Strömungsberuhigung für den Zufluss und eine Wärmedämmung um den äußeren Speichertank. Dieser verliert ständig Flüssigkeit durch Verdunstung. Kommt es zum Sieden, dann wird er sehr viel oder sogar seine gesamte Flüssigkeit verlieren. Wenn erst einmal Flüssigkeit fehlt und das Ausdehnungsgefäß leer ist, dann ist der äußere Speichertank gegen die Umgebung offen und unter Umständen der Korrosion ausgesetzt. Außerdem ist es sehr unkomfortabel, von Zeit zu Zeit immer wieder Flüssigkeit auffüllen zu müssen, um die Solarwärme weiter nutzen zu können. Durch das Auffüllen mit Frischwasser kommt auch jedesmal frischer Sauerstoff mit, was unter Umständen wieder die Korrosion fördert.

Der Erfindung liegt die Aufgabe zu Grunde, einen Dewar-Vakuumröhren-Doppeltank-Thermosiphonspeicher nach dem Vorbild von 10 2006 001 566 zu bauen, der die zuletzt geschilderten Nachteile nicht aufweist.

Der äußere Speichertank (1) wird nur teilweise gefüllt. Dadurch wird kein Ausdehnungsgefäß mehr benötigt, weil der äußere Speichertank diese Funktion dann mit erfüllt. Er benötigt dann lediglich noch einen Überlauf. Je niedriger der Füllstand in ihm ist, umso früher werden die Dewar-Vakuumröhren (3) sieden, umso mehr Oberfläche des inneren Speichertanks (4) werden aber auch nicht von der Flüssigkeit des äußeren Speichertanks berührt. Beide Speichertanks arbeiten dann als Heat-pipe, ohne dass Dampf aus den siedenden Dewar-Vakuumröhren (3) nach außen entweicht, weil dieser sofort wieder am inneren Speichertank kondensiert.

Zur Verhinderung bzw. zur Behinderung von Verdunstung kann der Überlauf des äußeren Speichertanks (1) mit einem nach außen öffnenden Rückflussverhinderer (5) ausgestattet werden, der erst bei einem geringen Überdruck gegenüber dem atmosphärischen Druck öffnet.

Die Verdunstung kann auch wirksam unterdrückt werden, indem der Flüssigkeit im äußeren Speichertank (1) eine geringe Menge eines flüssigen Zusatzes (10) zugegeben wird, der sich mit dieser nicht mischt, der leichter als diese ist, so dass er an der Oberfläche schwimmt, der später siedet und der einen sehr geringen Dampfdruck hat, damit er möglichst nicht verdunstet. Dieser Zusatz, z. B. von Raps-, Sonnenblumen- oder Olivenöl, versiegelt die Oberfläche der Flüssigkeit im äußeren Speichertank und stellt somit einen wirksamen Verdunstungsschutz dar, solange die Flüssigkeit in ihm nicht siedet. Auch ein sich mischender Zusatz, der den Dampfdruck des Gemisches senkt, verzögert die Verdunstung.

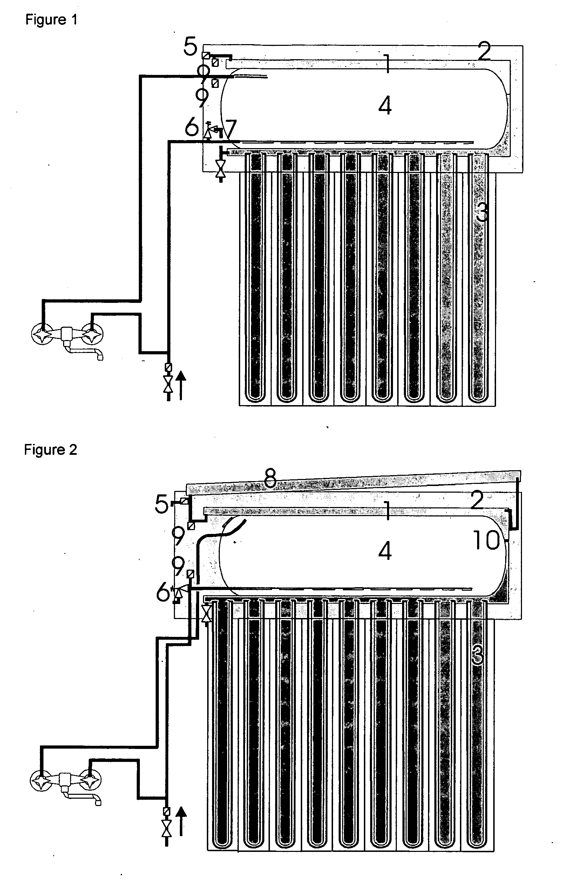

Um das Wasser, das durch Ausdehnung, Verdunstung und Verdampfung aus dem äußeren Speichertank entweicht, ohne manuellen Aufwand zu ersetzen, ist es vorteilhaft, wenn das bei Erwärmung durch Ausdehnung über das Sicherheitsventil (6) aus dem inneren Speichertank austretende Wasser unmittelbar in den äußeren Speichertank überströmt (7), wie Figure 1 beispielhaft zeigt. Lediglich das aus dessen Überlauf austretende Wasser fließt schließlich ab.

Um auch für den Fall, dass der äußere Speichertank siedet, zu verhindern, dass der Dampf nach außen entweicht, ist es vorteilhaft, an den äußeren Speichertank einen Kondensator (8) anzuschließen, wie Figure 2 beispielhaft zeigt. Dieser sollte sich über der gesamten Wasserspeichervorrichtung befinden und so angeordnet sein, dass das Kondensat möglichst vollständig in den äußeren Speichertank zurückfließt und dass die Verbindungsleitungen zwischen dem Kondensator und dem äußeren Speichertank zur Vermeidung von Konvektionsverlusten in den Kondensator siphoniert angeordnet und weitgehend durch die Wärmedämmung geschützt sind. Der Kreislauf des Wärmeträgermediums für den äußeren Speichertank bleibt dadurch stets geschlossen, so dass sowohl dieser als auch die Außenseite des inneren Speichertankes nicht mehr gegen Korrosion durch eintretenden Sauerstoff geschützt werden müssen. Zum Schutz gegen Schäden infolge eines Unterdruckes können beide Speichertanks mit nach innen öffnenden Rückflussverhinderern (9) ausgestattet werden, die erst bei einem geringen Unterdruck gegenüber dem atmosphärischen Druck öffnen.

Zur effektiven Wärmespeicherung ist der äußere Speichertank allseitig von einer Wärmedämmung eingeschlossen. Die Wärmedämmung des gesamten Systems kann wesentlich verbessert werden, wenn alle Armaturen innerhalb der Wärmedämmung untergebracht werden und die Rohranschlüsse für den inneren Speichertank nach unten wegführen.

## Patentansprüche

**1.** Wasserspeichervorrichtung zur Erwärmung durch Sonnenenergie mit einem äußeren Speichertank (1), der mit Wasser oder einem Wasser-Forstschutzmittel-Gemisch gefüllt und mit einer Wärmedämmung (2) umgeben ist, in den von unten Dewar-Solar-Vakuumröhren (3) hineinragen und **dadurch** ebenfalls gefüllt sind und in welchem sich ein weiterer, innerer Speichertank (4) befindet, der als Drucktank ausgelegt und mit Trinkwasser oder Brauchwasser gefüllt ist, **gekennzeichnet dadurch, dass** zur Aufnahme der sich beim Erwärmen ausdehnenden Flüssigkeit im äußeren Speichertank (1) kein Ausdehnungsgefäß verwendet wird, sondern dass der äußere Speichertank selbst zugleich als Ausdehnungsgefäß und dazu in nur teilgefülltem Zustand verwendet wird.

**2.** Wasserspeichervorrichtung zur Erwärmung durch Sonnenenergie nach einem der vorhergehenden Ansprüche, **dadurch gekennzeichnet, dass** der äußere Speichertank (1) mit einem als Sicherheitsventil wirkenden Rückflussverhinderer (5) ausgestattet ist, der erst bei einem geringen Überdruck gegenüber dem atmosphärischen Druck der Umgebung öffnet.

**3.** Wasserspeichervorrichtung zur Erwärmung durch Sonnenenergie nach einem der vorhergehenden Ansprüche, **dadurch gekennzeichnet, dass** die infolge von Erwärmung und Ausdehnung verdrängte Flüssigkeit aus dem inneren Speichertank (4) über ein druckbegrenzendes Sicherheitsventil (6) in den äußeren Speichertank (1) überströmt (7).

**4.** Wasserspeichervorrichtung zur Erwärmung durch Sonnenenergie nach einem der vorhergehenden Ansprüche, **dadurch gekennzeichnet, dass** oberhalb des äußeren Speichertanks (1) ein Kondensator (8) angebracht ist, der mit dem äußeren Speichertank so verbunden ist, dass entstehender Dampf in den Kondensator (8) gelangt und dass das gesamte Kondensat wieder in den äußeren Speichertank (1) zurückfließt.

**6.** Wasserspeichervorrichtung zur Erwärmung durch Sonnenenergie nach einem der vorhergehenden Ansprüche, **dadurch gekennzeichnet, dass** der Flüssigkeit im äußeren Speichertank eine geringe Menge einer anderen Flüssigkeit zugegeben wird, welche auf dieser schwimmt und deren Oberfläche gegen Verdunstung versiegelt (10) oder welche sich mit dieser mischt und deren Dampfdruck senkt.

**7.** Wasserspeichervorrichtung zur Erwärmung durch Sonnenenergie nach einem der vorhergehenden Ansprüche, **dadurch gekennzeichnet, dass** beide Speichertanks mit nach innen öffnenden Rückflussverhinderern (9) ausgestattet sind, die erst bei einem geringen Unterdruck gegenüber dem atmosphärischen Druck der Umgebung öffnen.

**8.** Wasserspeichervorrichtung zur Erwärmung durch Sonnenenergie nach einem der vorhergehenden Ansprüche, **dadurch gekennzeichnet, dass** ein kleiner Teil des inneren Speichertanks (4) nicht vom äußeren Speichertank (1) eingeschlossen ist.
